# FASCICULE DE BREVET EUROPEEN

(11) **EP 2 167 376 B1**
(45) Date de publication et mention de la délivrance du brevet: **01.12.2010**
(21) Numéro de dépôt: 08805878.9
(22) Date de dépôt: 28.05.2008
(51) Int. Cl.: B64C 1/00, B64C 1/06, B64C 25/00, B64C 25/04

(54) **CASE DE TRAIN D'ATTERRISSAGE À ENCOMBREMENT RÉDUIT**
FAHRWERKGEHÄUSE VON VERKLEINERTEN AUSMASSEN
REDUCED DIMENSION LANDING GEAR CASING

(30) Priorité: 15.06.2007 FR 0704290
(43) Date de publication de la demande: 31.03.2010
(73) Titulaire: AIRBUS OPERATIONS, 31060 Toulouse (FR)
(72) Inventeur: GUERING, Bernard, F-31850 Montrabe (FR); SAINT MARC, Laurent, F-47600 Nerac (FR)
(74) Mandataire: Petit, Maxime
(86) Numéro de dépôt international: PCT/FR2008/050934
(87) Numéro de publication internationale: WO 2009/004200

(56) Documents cités:
- WO-A-2007/057288
- WO-A-2007/057400

## Description

L'invention concerne une case de train d'atterrissage d'aéronef.

Il est connu que le train d'atterrissage d'un aéronef, par exemple, le train avant est logé, en position rétractée, dans un caisson disposé sous le plancher du poste de pilotage, cf. WO 2007/057 400.

Le caisson isole le train de la partie pressurisée de l'aéronef et est donc conçu pour résister à la pression régnant à bord de l'aéronef.

Ce caisson se présente sous la forme d'un bloc sensiblement parallélépipédique, de forme générale allongée, comprenant plusieurs panneaux assemblés les uns aux autres : un panneau longitudinal, deux panneaux latéraux verticaux et deux panneaux transversaux disposés aux deux extrémités du caisson qui sont alignées suivant sa dimension longitudinale, une ouverture étant prévue du côté opposé au panneau longitudinal.

Le caisson est disposé de façon renversée à la manière d'un capot avec le panneau longitudinal disposé sur le dessus et l'ouverture en dessous pour permettre de faire rentrer le train d'atterrissage dans le caisson et de l'en extraire.

Une pluralité de nervures de rigidification transversales sont agencées parallèlement les unes aux autres et sont fixées sur la surface externe du caisson de manière à former chacune un portique.

Dans cette structure les panneaux supportent les efforts dûs à la pression et les portiques collectent ces efforts afin de maintenir les panneaux en place.

Une telle structure est efficace pour assurer les fonctions de résistance mécanique à la pression et de transmission au fuselage des efforts exercés par le train d'atterrissage.

Cependant, le caisson occupe un volume important dans l'espace où il est installé, ce qui ne laisse pratiquement pas de place pour loger des équipements, par exemple des calculateurs.

La présente invention vise à remédier à au moins un des inconvénients précités en proposant une case de train d'atterrissage comprenant un caisson de forme longitudinale comportant des parois qui définissent un logement interne ouvert par le dessous pour permettre la rétractation d'un train d'atterrissage à l'intérieur du logement et son déploiement hors du logement, les parois du caisson séparant le logement interne non pressurisé d'une zone environnante de l'aéronef pressurisée, **caractérisée en ce que** le caisson comporte une ossature interne primaire comprenant:
- plusieurs arceaux de renfort transversaux primaires internes au logement,
- au moins un renfort central longitudinal interne au logement, les parois du caisson et les renforts étant configurés pour épouser les formes du train d'atterrissage et de son mécanisme de déploiement/rétractation.

Grâce à une telle ossature interne, le caisson offre une grande résistance mécanique à la pression s'exerçant sur lui et est particulièrement résistante aux efforts transmis par le train d'atterrissage.

Par ailleurs, en prévoyant une ossature interne de renforcement et en agençant les parois du caisson ainsi que les éléments d'ossature au plus près autour du train d'atterrissage et de son mécanisme de déploiement/rétractation on réduit l'encombrement du caisson.

De ce fait, l'espace ainsi dégagé par la diminution du volume occupé par le caisson peut être utilisé pour y loger du frêt, des équipements divers (calculateurs...).

Selon une caractéristique, ledit au moins un renfort central longitudinal relie les arceaux de renfort transversaux de l'ossature entre eux afin de rendre celle-ci plus solide.

Selon une caractéristique, ledit au moins un renfort central longitudinal est agencé de façon à être positionné entre deux roues du train d'atterrissage lorsque celui-ci est rétracté, ce qui permet de rapprocher les parois du caisson au plus près des roues du train d'atterrissage et donc de réduire d'avantage l'encombrement du caisson.

Selon une caractéristique, le renfort central longitudinal présente une partie supérieure incurvée suivant la même courbure que celle des roues du train d'atterrissage, permettant ainsi d'épouser la forme de ces dernières.

Lorsque le renfort est agencé entre les roues du train d'atterrissage, sa forme de secteur angulaire lui permet de s'inscrire parfaitement dans le contour extérieur des roues.

Selon une caractéristique, les arceaux de renfort transversaux ont chacun une forme générale de U renversé de façon à encadrer sur trois côtés, au plus près, la partie du train d'atterrissage et/ou de son mécanisme de déploiement/rétractation située à l'aplomb du renfort.

Cet agencement permet ainsi d'approcher les parois du caisson au plus près du train d'atterrissage et de son mécanisme afin d'obtenir un caisson de dimensions réduites.

Selon une caractéristique, les parois du caisson sont structurées de façon à former plusieurs tronçons successifs supportés par l'ossature interne primaire, chacun des tronçons ayant une forme adaptée à la forme de la partie du train d'atterrissage et/ou de son mécanisme de déploiement/rétractation encadrée par le tronçon.

La configuration en tronçons du caisson permet de simplifier la fabrication de celui-ci en enveloppant différentes parties spécifiques du train d'atterrissage et de son mécanisme à l'intérieur de tronçons de formes simples mais adaptées. On réalise en quelque sorte une approximation en facettes de la forme complexe de l'enveloppe externe du train et de son mécanisme par une pluralité de tronçons successifs ayant chacun une forme géométrique simple.

On dispose ainsi d'un tronçon avant ayant une paroi supérieure courbe pour épouser une partie du contour des roues du train d'atterrissage.

En outre, deux tronçons supplémentaires sont prévus en arrière du tronçon avant pour englober deux autres parties spécifiques du train d'atterrissage et de son mécanisme, à savoir un tronçon arrière ayant une paroi supérieure inclinée et un tronçon intermédiaire disposé entre le tronçon avant et le tronçon arrière et doté d'une paroi supérieure.

La paroi supérieure du tronçon intermédiaire est par exemple disposée à une cote supérieure à celle de la paroi supérieure inclinée du tronçon arrière.

La paroi supérieure du tronçon intermédiaire est, par exemple, horizontale afin de constituer un plan de travail pour le personnel chargé de la maintenance dans l'espace environnant le caisson.

Par ailleurs, selon une autre caractéristique, un décrochement vertical est prévu entre le tronçon arrière inférieur et le tronçon intermédiaire supérieur.

Selon une caractéristique, les parois supérieures du caisson ont des faces externes lisses qui facilitent l'intervention du personnel de maintenance autour du caisson.

Selon une caractéristique, les arceaux de renfort transversaux primaires forment des cloisons séparatrices entre les tronçons.

Selon une caractéristique, le caisson comprend des renforts longitudinaux latéraux internes qui sont parallèles au renfort central longitudinal de l'ossature primaire et qui relie entre eux les arceaux de renfort transversaux de l'ossature primaire.

Selon une autre caractéristique, des renforts transversaux secondaires internes au caisson peuvent être prévus et aménagés de façon parallèle aux arceaux de renfort transversaux primaires.

Selon une caractéristique, la case de train selon l'invention peut comporter un cadre avant et un cadre arrière faisant office de parois avant et arrière du caisson situées aux deux extrémités longitudinales opposées de celui-ci.

Dans cette configuration, le cadre avant est agencé du côté du caisson où sont logées les roues du train d'atterrissage et comprend deux parties :
- une partie inférieure formant la paroi avant du caisson et qui est agencée parallèlement à la tangente à la trajectoire des roues et,
- une partie supérieure inclinée par rapport à la partie inférieure de manière à s'éloigner du caisson.

La configuration brisée du cadre avant permet de gagner encore un peu plus de place dans l'espace environnant le caisson par rapport à un cadre avant dont les parties inférieure et supérieure seraient alignées l'une avec l'autre.

L'invention concerne également un aéronef qui comprend une case de train d'atterrissage conforme au bref exposé qui précède.

Selon une caractéristique, à l'extérieur du caisson, des organes de stabilisation verticale des parois du caisson, par exemple des bielles, prennent appui, d'une part, sur une paroi du caisson et, d'autre part, sur la paroi interne du fuselage de l'aéronef.

Ces organes sont par exemple disposés au niveau du plan de la paroi supérieure du caisson, c'est-à-dire dans le plan de cette paroi.

L'agencement de ces organes en partie supérieure du caisson est avantageux dans la mesure où ces organes ont moins d'efforts à fournir que s'ils étaient disposés en partie basse du caisson. En outre, ainsi agencés ils sont plus accessibles pour d'éventuelles opérations de maintenance que s'ils étaient disposés en partie basse.

Selon une caractéristique, de part et d'autre du caisson, au moins un panneau ou cloison s'étend longitudinalement entre les parois longitudinales verticales du caisson et la paroi interne du fuselage.

Ces panneaux de renforcement externes servent à éviter que les parois du caisson, notamment les parois verticales de ce dernier, ne se déforment au cours du temps en fonction des sollicitations auxquelles elles sont soumises.

D'autres caractéristiques et avantages apparaitront au cours de la description qui va suivre, donnée uniquement à titre d'exemple non limitatif et faite en référence aux dessins annexés, sur lesquels :
- la figure 1 est une vue schématique générale de la case de train d'atterrissage selon l'invention avec le train d'atterrissage sorti ;
- la figure 2 est une vue générale en perspective de dessus de la case de train de la figure 1 ;
- la figure 3 représente, en vue de dessous, l'intérieur de la case de train de la figure 2 sans le train d'atterrissage ;
- la figure 4 est une vue schématique en coupe longitudinale de la case de train des figures précédentes avec le train d'atterrissage représenté dans les deux positions extrêmes ;
- la figure 5 illustre de façon schématique en perspective les structures de l'aéronef environnant la case de train selon l'invention.

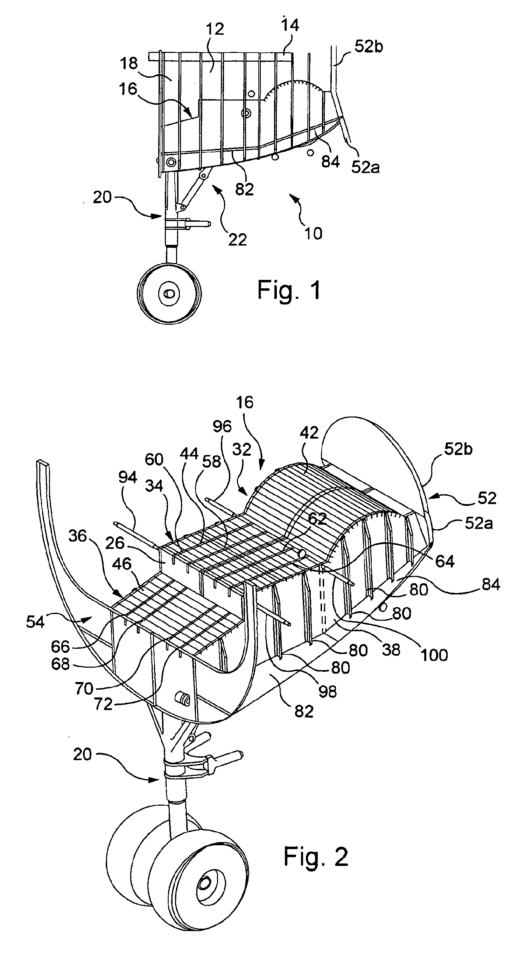

Comme représenté à la figure 1 et désigné par la référence générale notée 10, une partie avant d'un aéronef comporte un espace 12 situé à l'avant de l'aéronef en dessous d'un plancher 14, par exemple le plancher du poste de pilotage.

Cet espace renferme une case de train d'atterrissage 16 pour le logement du train d'atterrissage avant lors du vol de l'aéronef.

Une zone pressurisée 18 située sous le plancher 14 environne la case de train 16.

Dans la position de la figure 1 le train d'atterrissage 20 est représenté en position déployée avec une partie de son mécanisme de déploiement et de rétractation 22.

La figure 2 représente en perspective la case de train 16 avec le train d'atterrissage 20 sorti, sans le plancher 14.

La case de train 16 comprend un caisson ayant une forme longitudinale correspondant à l'axe longitudinal de l'aéronef le long duquel le train 20 se rétracte.

Le caisson 16 est fermé sur le dessus et sur les côtés afin d'isoler la zone externe pressurisée 18 de l'aéronef de l'intérieur du caisson non pressurisé.

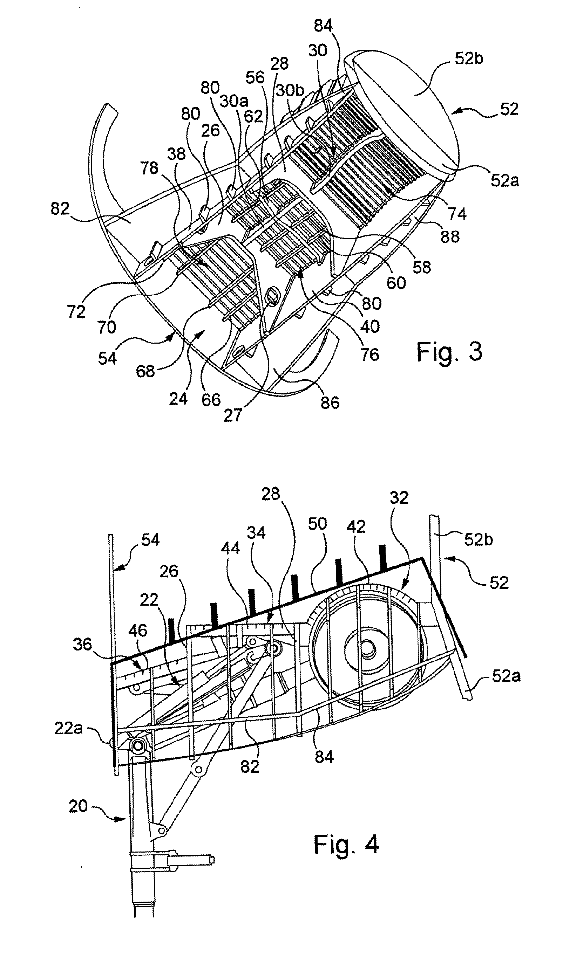

Le caisson comporte des parois supérieures et latérales verticales qui forment l'enveloppe externe du caisson et définissent un logement interne 24 ouvert par le dessous pour permettre la rétractation du train d'atterrissage dans le logement (figure 4) et son déploiement (figures 1 et 2).

Il convient de noter que sur la figure 4, les deux positions extrêmes du train d'atterrissage et de son mécanisme de déploiement/rétractation ont été représentées en traits pleins.

Le caisson comporte une ossature interne, appelée ossature primaire, qui comprend plusieurs arceaux de renfort transversaux primaires internes au logement 24.

L'exemple de réalisation illustré sur les figures présente deux arceaux de renfort 26, 28 qui sont fixés aux faces internes des parois du caisson (figure 3).

L'ossature interne comprend également au moins un renfort central longitudinal 30 interne au logement et qui est également fixé aux faces internes des parois du caisson.

Comme représenté sur la figure 3, le renfort longitudinal 30 relie entre eux les arceaux de renfort transversaux 26 et 28 et s'étend longitudinalement dans la partie avant de la case de train.

Dans l'exemple de réalisation, le renfort 30 est réalisé en deux parties, une première partie 30a qui relie entre eux les renforts transversaux 26 et 28 et une seconde partie 30b qui s'étend vers l'avant à partir du renfort transversal 28.

Comme représenté sur les figures 2 à 4, les parois du caisson suivent au plus près le contour extérieur du train d'atterrissage et de son mécanisme de rétractation/déploiement afin de générer un encombrement externe minimal pour la case de train.

De plus, les différents renforts transversaux et longitudinaux possèdent une configuration particulièrement adaptée pour épouser les formes du train d'atterrissage et de son mécanisme de déploiement/rétractation.

Pour ce faire, les différents renforts de l'ossature interne primaire ont une forme concave adaptée à la forme de la partie du train et/ou de son mécanisme 22 à l'aplomb de laquelle ils sont positionnés.

Ainsi, par exemple, les arceaux de renfort transversaux 26 et 28 ont chacun une configuration générale en forme de U renversé afin d'encadrer au plus près, sur trois côtés (partie supérieure et parties latérales) la partie concernée du train et/ou de son mécanisme située au droit du renfort.

On notera que les arceaux 26 et 28 ont une dimension transversale relativement grande afin d'augmenter l'inertie des arceaux.

Par ailleurs, un trou oblong 27 est pratiqué dans l'une des jambes de l'arceau 26 (figure 3) afin d'être traversé par un vérin dit de relevage du mécanisme 22.

De plus, la forme allongée du trou permet le débattement du vérin lors de l'actionnement du train d'atterrissage entre ses deux positions extrêmes représentées sur la figure 4.

Pour que le caisson ait une forme qui soit adaptée au plus près à la forme du train d'atterrissage et de son mécanisme de déploiement/rétractation, le caisson est structuré en plusieurs tronçons successifs de formes simples qui s'adaptent chacun à la forme d'une zone spécifique du train et/ou de son mécanisme.

On distingue sur les figures 2 et 4 trois tronçons successifs qui sont supportés par l'ossature interne représentée à la figure 3 et qui sont chacun configurés pour suivre le contour externe d'une partie du train d'atterrissage et/ou de son mécanisme de déploiement/rétractation.

Les parois du caisson 16 sont ainsi structurées de façon à former successivement un tronçon avant 32 situé à l'extrémité avant du caisson et à l'aplomb des roues du train d'atterrissage lorsque celui-ci est en position rétractée (figure 4), un tronçon intermédiaire 34 disposé immédiatement en amont du tronçon avant 32 et qui est situé à l'aplomb d'une première partie du mécanisme de déploiement/rétractation du train et un tronçon arrière 36 disposé immédiatement en amont du tronçon intermédiaire 34 et qui est situé à l'aplomb d'une deuxième partie du mécanisme 22.

Ces tronçons sont délimités entre eux par les deux renforts transversaux 26 et 28 de l'ossature interne représentée à la figure 3 et qui séparent ainsi partiellement deux tronçons adjacents.

Les tronçons sont délimités extérieurement par les parois latérales verticales 38 et 40 du caisson et par des parois supérieures 42, 44 et 46 qui constituent la partie supérieure du caisson.

Comme représenté sur les figures 1, 2 et 4, les parois supérieures du caisson ont des faces externes lisses, contrairement au caisson de l'art antérieur représenté de façon superposée, à la figure 4, par la référence 50.

Ces faces supérieures lisses facilitent l'aménagement de l'espace de la zone pressurisée environnant le caisson et rendent également plus facile les opérations de maintenance dans cette zone.

On notera que la paroi supérieure du caisson au niveau du tronçon intermédiaire est plane et horizontale de façon à aménager une surface plane ergonomique pour les opérations de maintenance.

La surface plane inclinée de la paroi supérieure 46 du tronçon arrière facilite également les interventions humaines autour du caisson.

La paroi supérieure 42 du tronçon avant 32 présente une courbure convexe tournée vers l'extérieur du caisson de façon à épouser le contour supérieur des roues du train d'atterrissage.

Par ailleurs, le renfort central longitudinal 30b fixé à la paroi supérieure 42 présente une courbure avec une concavité tournée vers l'intérieur du caisson, ce qui lui permet d'être positionné entre les deux roues du train d'atterrissage lorsque celui-ci est rétracté (figure 4).

Les roues peuvent ainsi être placées au plus près de la surface de la face interne de la paroi 42, ainsi que représenté sur la figure 4, afin de réduire l'encombrement.

On notera que la paroi supérieure du tronçon intermédiaire 34 est agencée à une cote supérieure à celle de la paroi supérieure 46 du tronçon arrière 36 et qu'un décrochement vertical entre ces deux tronçons adjacents est ainsi réalisé.

Ce décrochement est réalisé grâce au renfort transversal 26 qui se prolonge vers le haut au-delà de la paroi supérieure 46, ce prolongement formant également une partie externe du caisson.

La structure du caisson se trouve simplifiée puisque le prolongement du renfort transversal 26 à l'extérieur du caisson permet d'éviter d'avoir à rajouter une pièce supplémentaire pour former ce décrochement au niveau de l'enveloppe externe du caisson.

Par ailleurs, le caisson est fermé à ses deux extrémités longitudinales avant et arrière par un cadre avant 52 et un cadre arrière 54.

Le cadre avant 52 est disposé dans la partie du fuselage située à l'avant de l'aéronef et qui est donc rétrécie. Ce cadre a une forme sensiblement circulaire et est formé de deux parties, une partie inférieure 52a et une partie supérieure 52b, chacune en forme de demi-lune.

La partie inférieure 52a constitue une paroi avant du caisson et est agencée parallèlement à la tangente à la trajectoire des roues du train d'atterrissage afin de ne pas interférer avec ces dernières lors de leur déplacement.

La partie supérieure 52b est inclinée par rapport à la partie inférieure 52a en éloignement du caisson, ceci afin d'offrir un gain de volume supplémentaire aménageable autour du caisson (figures 1 et 4).

Le cadre arrière 54 a une forme générale de U ouvert vers le haut et la base du U sert de paroi arrière fermant le caisson (figures 2 et 3).

On notera que le cadre arrière 54 est pourvu d'une ouverture dont les dimensions sont légèrement supérieures à celles de l'extrémité 22a du vérin de relevage du mécanisme 22 du train d'atterrissage mentionné ci-dessus.

Cet aménagement dans la paroi du cadre arrière favorise le débattement vertical de l'extrémité du vérin lors du mouvement de déploiement et de rétractation du train.

Par ailleurs, un capot étanche non représenté est fixé autour de l'ouverture de façon à obturer cette dernière.

En plus du longeron longitudinal 30 (par exemple réalisé en deux parties 30a et 30b vissées sur les arceaux transversaux) et des arceaux de renfort transversaux 26 et 28, la structure servant d'appui interne au caisson comporte un arceau intermédiaire de renforcement transversal 56 agencé dans le tronçon intermédiaire entre les deux arceaux 26 et 28.

Plusieurs longerons disposés longitudinalement, de façon parallèle au renfort central 30, sont fixés sur les faces internes des parois supérieures 44 et 46 des tronçons intermédiaire et arrière 34 et 36 (figures 2 et 3).

Sur la figure 2 représentant le caisson en vue de dessus en perspective, les différents renforts ont été matérialisés pour les besoins de l'exposé mais ils ne sont pas visibles depuis l'extérieur du caisson.

On dénombre ainsi quatre poutrelles longitudinales de renforcement dans le tronçon intermédiaire, disposées deux à deux de part et d'autre du longeron 30a, à savoir les poutrelles 58 et 60 et les poutrelles 62 et 64 (figures 2 et 3).

Dans le tronçon arrière quatre poutrelles longitudinales sont agencées parallèlement les unes aux autres, à savoir les poutrelles 66, 68, 70 et 72.

Une pluralité de renforts transversaux sont également agencés dans chaque tronçon du caisson parallèlement les uns aux autres et sont représentés sur les figures 2 et 3 (sur la figure 2 ils ont également été matérialisés mais ne sont pas visibles de l'extérieur du caisson).

On distingue ainsi une première pluralité de renforts transversaux 74 disposés au niveau de la paroi supérieure du tronçon avant, une deuxième pluralité 76 de renforts transversaux disposés au niveau de la paroi supérieure du tronçon intermédiaire et une troisième pluralité 78 de renforts transversaux disposés au niveau de la paroi supérieure du tronçon arrière.

Par exemple, ces renforts transversaux supplémentaires internes au caisson sont intégrés dans les panneaux constituant les parois supérieures du caisson afin d'en simplifier la fabrication.

On notera que les parois latérales 38 et 40 du caisson sont pourvues de raidisseurs externes verticaux 80 qui renforcent de façon supplémentaire la structure du caisson sur les côtés de celui-ci et non sur le dessus afin de limiter l'encombrement externe du caisson.

Ces raidisseurs s'étendent transversalement sur toute la hauteur du caisson mais ont une faible dimension d'extension perpendiculairement aux parois 38,40.

Une structure de renforcement supplémentaire est en outre prévue en partie basse du caisson sous la forme d'un ou de plusieurs panneaux disposés de part et d'autre dudit caisson, de façon longitudinale, afin d'éviter une déformation des parois latérales 38 et 40 du caisson.

Dans l'exemple de réalisation, cette structure supplémentaire est réalisée sous la forme de quatre panneaux longitudinaux s'étendant deux à deux de part et d'autre des parois latérales du caisson, les deux panneaux situés d'un même côté du caisson étant fixés à l'extrémité l'un de l'autre, comme représenté sur la figure 3 par les panneaux 82 et 84 situés dans le prolongement l'un de l'autre et de même pour les panneaux 86 et 88 agencés du côté opposé.

Ces panneaux sont profilés afin de tenir compte de la réduction de diamètre du fuselage lorsque l'on se déplace du cadre arrière 54 vers le cadre avant 52.

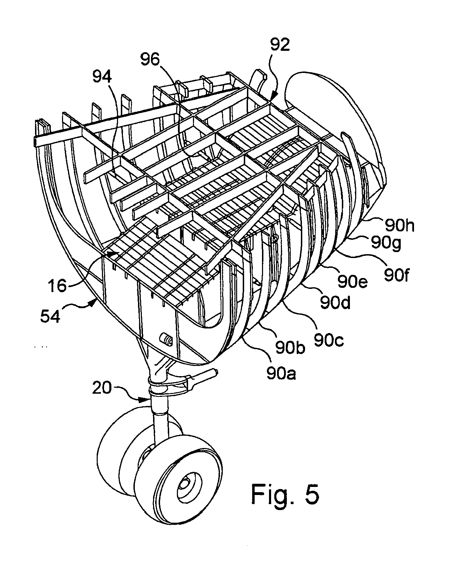

Ces panneaux disposés perpendiculairement aux faces des parois latérales 38 et 40 du caisson, sont fixés à ces dernières et servent de liaison avec la paroi interne du fuselage et sa structure qui est illustrée sur la figure 5.

Sur cette figure on a représenté de façon schématique des cadres 90a, 90b, 90c, 90d, 90e, 90f, 90g et 90h de la structure interne du fuselage, ainsi que l'ossature 92 du plancher 14 de la figure 1.

A l'extérieur du caisson 16, plusieurs organes de stabilisation verticale des parois du caisson sont prévus.

Ces organes sont placés entre le caisson et la paroi interne du fuselage afin de prendre appui sur l'un et l'autre et ainsi de stabiliser de façon verticale les parois du caisson.

Ces organes sont placés de préférence en partie haute du caisson afin, d'une part, d'encaisser des efforts moins importants qu'en partie basse, et, d'autre part, de faciliter les opérations de maintenance.

Ces organes sont par exemple réalisés sous la forme de bielles 94, 96, 98, 100 disposées deux à deux de part et d'autre du caisson, comme représenté sur la figure 2.

Ces bielles sont agencées horizontalement au niveau du plan de la paroi supérieure du caisson.

Par exemple, ces organes sont agencés au niveau du plan de la paroi supérieure 44 du tronçon intermédiaire et sont disposés transversalement dans le plan vertical transversal des renforts transversaux 26 et 28 où la plupart des efforts exercés sur le caisson sont repris.

La figure 5 illustre l'agencement de deux, 94, 96, des quatre organes de stabilisation verticale du caisson entre les parois de ce dernier et les cadres 90a-h du fuselage.

## Revendications

1. Case de train d'atterrissage comprenant un caisson (16) de forme longitudinale comportant des parois qui définissent un logement interne (24) ouvert par le dessous pour permettre la rétractation d'un train d'atterrissage (20) à l'intérieur du logement et son déploiement hors du logement, les parois du caisson séparant le logement interne non pressurisé d'une zone environnante (18) de l'aéronef pressurisée, **caractérisée en ce que** le caisson comporte une ossature interne primaire comprenant:
- plusieurs arceaux de renfort transversaux primaires (26, 28) internes au logement,
- au moins un renfort central longitudinal (30a, 30b) interne au logement, les parois du caisson et les renforts étant configurés pour épouser les formes du train d'atterrissage (20) et de son mécanisme (22) de déploiement/rétractation.

2. Case de train d'atterrissage selon la revendication 1, **caractérisée en ce que** ledit au moins un renfort central longitudinal (30a, 30b) relie les arceaux de renfort transversaux (26, 28).

3. Case de train d'atterrissage selon la revendication 1 ou 2, **caractérisée en ce que** ledit au moins un renfort central longitudinal est agencé de façon à être positionné entre deux roues du train d'atterrissage lorsque celui-ci est rétracté.

4. Case de train d'atterrissage selon l'une des revendications 1 à 3, **caractérisée en ce que** les arceaux de renfort transversaux (26, 28) ont chacun une forme générale de U renversé de façon à encadrer sur trois côtés, au plus près, la partie du train d'atterrissage et/ou de son mécanisme de déploiement/rétractation située à l'aplomb du renfort.

5. Case de train d'atterrissage selon l'une des revendications 1 à 4, **caractérisée en ce que** les parois du caisson sont structurées de façon à former plusieurs tronçons (32, 34, 36) successifs supportés par l'ossature interne primaire, chacun des tronçons ayant une forme adaptée à la forme de la partie du train d'atterrissage et/ou de son mécanisme de déploiement/rétractation encadrée par le tronçon.

6. Case de train d'atterrissage selon l'une des revendications 1 à 5, **caractérisée en ce que** les parois supérieures (42, 44, 46) du caisson ont des faces externes lisses.

7. Case de train d'atterrissage selon l'une des revendications 1 à 6, **caractérisée en ce qu'**elle comporte un cadre avant (52) et un cadre arrière (54) faisant office de parois avant et arrière du caisson situées aux deux extrémités longitudinales opposées de celui-ci, le cadre avant (52) étant agencé du côté du caisson où sont logées les roues et comprenant deux parties :
- une partie inférieure (52a) formant la paroi avant du caisson et qui est agencée parallèlement à la tangente à la trajectoire des roues et,
- une partie supérieure (52b) inclinée par rapport à la partie inférieure de manière à s'éloigner du caisson.

8. Aéronef comprenant une case de train d'atterrissage selon l'une des revendications 1 à 7.

9. Aéronef selon la revendication 8, **caractérisée en ce que**, à l'extérieur du caisson, des organes (94, 96, 98, 100) de stabilisation verticale des parois du caisson prennent appui, dune part, sur une paroi du caisson et, d'autre part, sur la paroi interne du fuselage de l'aéronef.

10. Aéronef selon la revendication 8 ou 9, **caractérisée en ce que**, de part et d'autre du caisson, au moins un panneau (82, 84, 86, 88) s'étend longitudinalement entre les parois longitudinales verticales du caisson et la paroi interne du fuselage.

## Claims

1. A landing gear compartment comprising a box (16) of longitudinal form comprising walls that define an inner housing (24) open from below in order to allow the retraction of a landing gear (20) inside the housing and deployment thereof outside the housing, the walls of the box separating the non-pressurized inner housing from a surrounding pressurized zone (18) of the aircraft, **characterized in that** the box comprises a primary inner framework comprising:
- several primary transverse reinforcement hoops (26, 28) inside the housing,
- at least one longitudinal central reinforcement (30a, 30b) inside the housing, the walls of the box and the reinforcements being configured to conform to the shapes of landing gear (20) and of its deployment/retraction mechanism (22).

2. A landing gear compartment according to claim 1, **characterized in that** the said at least one longitudinal central reinforcement (30a, 30b) connects the transverse reinforcement hoops (26, 28).

3. A landing gear compartment according to claim 1 or 2, **characterized in that** the said at least one longitudinal central reinforcement is arranged so as to be positioned between two wheels of the landing gear when the latter is retracted.

4. A landing gear compartment according to one of claims 1 to 3, **characterized in that** transverse reinforcement hoops (26, 28) each have a general inverted U shape so as to surround as closely as possible, on three sides, the portion of the landing gear and/or of its deployment/retraction mechanism situated under the reinforcement.

5. Landing gear compartment according to one of claims 1 to 4, **characterized in that** the walls of the box are structured so as to form several successive sections (32, 34, 36) supported by the primary inner framework, each of the sections having a shape adapted to the shape of the portion of the landing gear and/or of its deployment/retraction mechanism surrounded by the section.

6. A landing gear compartment according to one of claims 1 to 5, **characterized in that** upper walls (42. 44, 46) of the box have smooth outer faces.

7. A landing gear compartment according to one of claims 1 to 6, **characterized in that** it comprises a front frame (52) and a rear frame (54) serving as front and rear walls of the box situated at the two opposite longitudinal ends thereof, the front frame (52) being arranged on the side of the box where the wheels are accommodated and comprising two parts:
- a lower part (52a) forming the front wall of the box and which is arranged parallel to the tangent to the trajectory of the wheels and,
- an upper part (52b) slanting in relation to the lower part so as to move away from the box.

8. An aircraft comprising a landing gear compartment according to one of claims 1 to 7.

9. An aircraft according to claim 8, **characterized in that**, on the outside of the box, vertical stabilization devices (94, 96, 98, 100) for the walls of the box bear on a wall of the box, and also bear on the inner wall of the fuselage of the aircraft.

10. An aircraft according to claim 8 or 9, **characterized in that**, on both sides of the box, at least one panel (82, 84, 86, 88) extends longitudinally between the vertical longitudinal walls of the box and the inner wall of the fuselage.

## Patentansprüche

1. Fahrwerkgehäuse, umfassend einen Kasten (16) von Längsform, der Wände umfasst, die eine innere Aufnahme (24) begrenzen, die unten offen ist, um das Einfahren eines Fahrwerks (20) in das Innere der Aufnahme und sein Ausfahren aus der Aufnahme zu gestatten, wobei die Wände des Kastens die innere Aufnahme ohne Druckausgleich von einer umgebenden Zone (18) des Flugzeugs mit Druckausgleich trennen, **dadurch gekennzeichnet, dass** der Kasten ein primäres inneres Skelett aufweist, umfassend:
- mehrere primäre Querverstärkungsbögen (26, 28) im Inneren der Aufnahme,
- mindestens eine zentrale Längsverstärkung (30a, 30b) im Inneren der Aufnahme, wobei die Wände des Kastens und die Verstärkungen ausgebildet sind, um sich an die Formen des Fahrwerks (20) und seines Aus- und Einfahrmechanismus (22) anzuschmiegen.

2. Fahrwerkgehäuse nach Anspruch 1, **dadurch gekennzeichnet, dass** die mindestens eine zentrale Längsverstärkung (30a, 30b) die Querverstärkungsbögen (26, 28) verbindet.

3. Fahrwerkgehäuse nach Anspruch 1 oder 2, **dadurch gekennzeichnet, dass** die mindestens eine zentrale Längsverstärkung so angeordnet ist, dass sie zwischen zwei Rändern des Fahrwerks positioniert ist, wenn dieses eingefahren ist.

4. Fahrwerkgehäuse nach einem der Ansprüche 1 bis 3, **dadurch gekennzeichnet, dass** die Querverstärkungsbögen (26, 28) jeweils die allgemeine Form eines umgekehrten U's haben, so dass sie den Teil des Fahrwerks und/oder seines Ein- und Ausfahrmechanismus, der auf Höhe der Verstärkung gelegen ist, auf drei Seiten möglichst nahe umrahmen.

5. Fahrwerkgehäuse nach einem der Ansprüche 1 bis 4, **dadurch gekennzeichnet, dass** die Wände des Kastens so strukturiert sind, dass sie mehrere aufeinanderfolgende Abschnitte (32, 34, 36) bilden, die von dem primären inneren Skelett getragen werden, wobei jeder Abschnitt eine Form besitzt, die an die Form des von dem Abschnitt umrahmten Teils des Fahrwerks und/oder seines Aus- und Einfahrmechanismus angepasst ist.

6. Fahrwerkgehäuse nach einem der Ansprüche 1 bis 5, **dadurch gekennzeichnet, dass** die oberen Wände (42, 44, 46) des Kastens glatte Außenseiten besitzen.

7. Fahrwerkgehäuse nach einem der Ansprüche 1 bis 6, **dadurch gekennzeichnet, dass** es einen vorderen Rahmen (52) und einen hinteren Rahmen (54) umfasst, die als Vorderwand und Rückwand dienen, die an dessen beiden entgegengesetzten Längsenden gelegen sind, wobei der vordere Rahmen (52) auf der Seite des Kastens angeordnet ist, auf der die Räder untergebracht sind, und zwei Teile umfasst:
- einen unteren Teil (52a), der die vordere Wand des Kastens bildet und der parallel zur Tangente zu der Bewegungsbahn der Räder angeordnet ist, und
- einen oberen Teil (52b), der bezüglich des unteren Teils so geneigt, ist dass er sich von dem Kasten entfernt.

8. Flugzeug, das ein Fahrwerkgehäuse nach einem der Ansprüche 1 bis 7 umfasst.

9. Flugzeug nach Anspruch 8, **dadurch gekennzeichnet, dass** außerhalb des Kastens Organe (94, 96, 98, 100) zur vertikalen Stabilisierung der Wände des Kastens einerseits auf einer Wand des Kastens und andererseits auf der Innenwand des Flugzeugrumpfs aufliegen.

10. Flugzeug nach Anspruch 8 oder 9, **dadurch gekennzeichnet, dass** zu beiden Seiten des Kastens mindestens eine Platte (82, 84, 86, 88) sich in Längsrichtung zwischen den vertikalen Längswänden des Kastens und der Innenwand des Rumpfs erstreckt.
